# EUROPEAN PATENT APPLICATION

(11) **EP 3 889 805 A1**
(43) Date of publication of application: **06.10.2021**
(21) Application number: 20214278.2
(22) Date of filing: 15.12.2020
(51) Int. Cl.: G06F 16/84

(54) **METHOD, APPARATUS, AND STORAGE MEDIUM FOR PARSING DOCUMENT**

(30) Priority: 03.04.2020 CN 202010261296
(71) Applicant: Beijing Baidu Netcom Science and Technology Co., Ltd., Beijing 100085 (CN)
(72) Inventor: ZHANG, Yipeng, Beijing, 100085 (CN); ZHANG, Zhen, Beijing, 100085 (CN); LIU, Minghao, Beijing, 100085 (CN); YAO, Rongjie, Beijing, 100085 (CN); GUO, Jiangliang, Beijing, 100085 (CN)
(74) Representative: advotec.

(57) **Abstract**

The disclosure provides a method and an apparatus for parsing a document, a device and a storage medium, and relates a field of document parsing. The detailed implementing solution includes: receiving a request for parsing the document; downloading the document based on the request; converting the document into an extensible markup language (XML) file; parsing the XML file to extract document content from the XML file; and storing the document content in a JavaScript Object Notation (JSON) format into a database. With the method for parsing the document according to embodiments of the disclosure, an efficiency of parsing the document may be improved.

## Description

### FIELD

The disclosure relates to the field of computer technologies, and particularly to the field of document parsing, and provides a method for parsing a document, an apparatus for parsing a document, and a storage medium.

### BACKGROUND

Presently, various document formats are widely used in work and life. As a common manner for processing a document, document parsing may complete a pre-work of a task for extracting content from the document.

In the related art, the document parsing is performed by employing an Apache POI (point of information) tool. In this way, it still needs to improve the efficiency of document parsing when the document is parsed in batches.

### SUMMARY

According to a first aspect of embodiments of the disclosure, a method for parsing a document is provided. The method includes: receiving a request for parsing the document; downloading the document based on the request; converting the document into an extensible markup language (XML) file; parsing the XML file to extract document content from the XML file; and storing the document content in a JavaScript Object Notation (JSON) format into a database.

In some embodiments, downloading the document based on the request includes: downloading the document based on the request by a download task queue, the download task queue including a plurality of download tasks, and each download task for calling a corresponding download thread to obtain the request and downloading the document based on the request. Converting the document into the XML file includes: converting the document into the XML file by a conversion task queue, the conversion task queue including a plurality of conversion tasks, and each conversion task for calling a corresponding conversion thread to convert the document downloaded by the download task into the XML file. Parsing the XML file to extract the document content from the XML file includes: parsing the XML file by a parsing task queue to extract the document content, the parsing task queue including a plurality of parsing tasks, and each parsing task calling a parsing thread to parse the XML file.

In some embodiments, the method further includes: monitoring a state of the download task in the download task queue; and adding a new conversion task corresponding to the download task into the conversion task queue after the download task is completed.

In some embodiments, the method further includes: monitoring a state of the conversion task in the conversion task queue; and adding a new parsing task corresponding to the conversion task into the parsing task queue after the conversion task is completed.

In some embodiments, the document is a word document. Converting the document into the XML file includes: converting the document into the XML file by a Libreoffice converter. Parsing the XML file to extract the document content from the XML file includes: parsing the XML file by an ElementTree parser to extract the document content from the XML file.

In some embodiments, the method further includes: managing the download task queue, the conversion task queue, and the parsing task queue by a distributed task queue management tool, in which, the distributed task queue management tool, the Libreoffice converter, and the ElementTree parser being loaded in a Docker container engine.

In some embodiments, the database has a mutual exclusion lock, and a task other than a current task is prohibited reading/writing in the database when the mutual exclusion lock is occupied by the current task.

In some embodiments, a number of conversion tasks is greater than a number of download tasks, and a number of conversion tasks is greater than a number of parsing tasks.

According to a second aspect of embodiments of the disclosure, an apparatus for parsing a document is provided. The apparatus includes: a component container, a database component, a document download component, a document conversion component, and a document parsing component. The component container includes an interface for receiving a request for parsing the document. The database component is provided in the component container. The document download component is provided in the component container, and configured to download the document based on the request received via the interface. The document conversion component is provided in the component container, and configured to convert the document into an XML file. The document parsing component is provided in the component container, and configured to parse the XML file to extract document content from the XML file; and to store the document content in a JSON format into the database component.

In some embodiments, the document download component is configured to download the document based on the request by a download task queue, the download task queue including a plurality of download tasks, and each download task for calling a corresponding download thread to obtain the request and downloading the document based on the request; the document conversion component is configured to convert the document into the XML file by a conversion task queue, the conversion task queue including a plurality of conversion tasks, and each conversion task for calling a corresponding conversion thread to convert the document downloaded by the download task into the XML file; and the document parsing component is configured to parse the XML file by a parsing task queue to extract the document content, the parsing task queue including a plurality of parsing tasks, and each parsing task calling a parsing thread to parse the XML file.

In some embodiments, the apparatus further includes: a first monitoring component, configured to monitor a state of the download task in the download task queue; and to add a new conversion task corresponding to the download task into the conversion task queue after the download task is completed.

In some embodiments, the apparatus further includes: a second monitoring component, configured to monitor a state of the conversion task in the conversion task queue; and to add a new parsing task corresponding to the conversion task into the parsing task queue after the conversion task is completed.

In some embodiments, the document is a word document, the document conversion component is implemented by a Libreoffice converter; and the document parsing component is implemented by an ElementTree parser.

In some embodiments, the apparatus further includes: a task queue management component, configured to control the document download component by the download task queue, to control the document conversion component by the conversion task queue, and to control the document parsing component by the parsing task queue, the task queue management component being implemented by a distributed task queue management tool, and the component container being implemented by a Docker container engine.

According to a third aspect of embodiments of the disclosure, a non-transitory computer readable storage medium is provided. The non-transitory computer readable storage medium has computer instructions stored thereon. The computer instructions are configured to enable a computer to execute the method for parsing the document according to the first aspect of the embodiments.

It should be understood that, descriptions in Summary of the disclosure does not aim to limit a key or important feature in embodiments of the disclosure, and does not used to limit the scope of the disclosure. Other features of the disclosure will be easily understood by following descriptions.

### BRIEF DESCRIPTION OF THE DRAWINGS

The accompanying drawings are used for better understanding the solution and do not constitute a limitation of the disclosure.
FIG. 1 is a flow chart illustrating a method for parsing a document according to embodiments of the disclosure.
FIG. 2 is a flow chart illustrating a method for parsing a document according to embodiments of the disclosure.
FIG. 3 is a block diagram illustrating an apparatus for parsing a document according to embodiments of the disclosure.
FIG. 4 is a block diagram illustrating an apparatus for parsing a document according to embodiments of the disclosure.
FIG. 5 is a block diagram illustrating an apparatus for parsing a document according to embodiments of the disclosure.
FIG. 6 is a flow chart illustrating a processing procedure for parsing a document according to embodiments of the disclosure.
FIG. 7 is a block diagram illustrating an exemplary electronic device capable of implementing embodiments of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

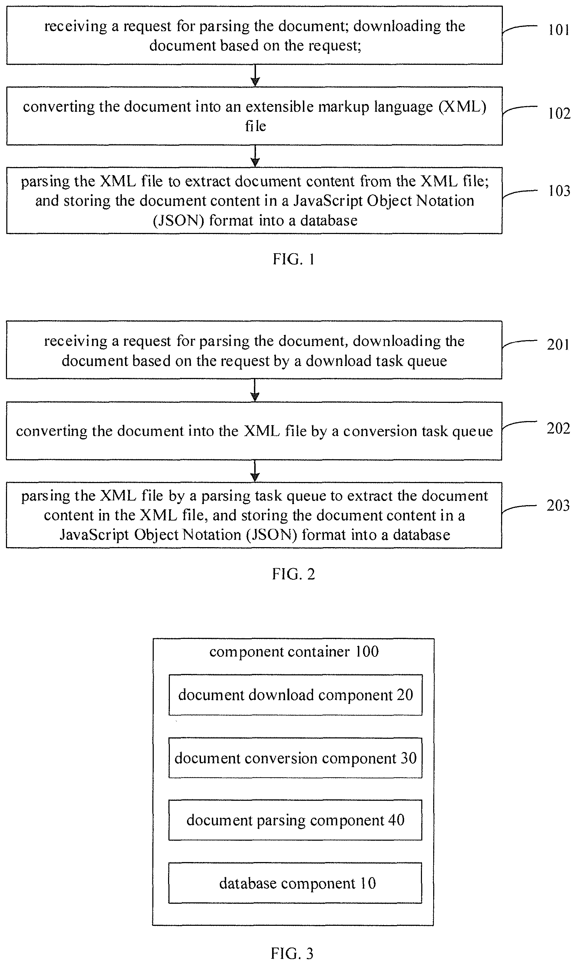

FIG. 1 is a flow chart illustrating a method for parsing a document according to embodiments of the disclosure. As illustrated in FIG. 1, the method includes the following.

At block 101, a request for parsing the document is received, and the document is downloaded based on the request.

In some embodiments, a document address is carried in the request. By receiving the request, the corresponding document is downloaded based on the document address carried in the request. In some embodiments, the request may also carry a file identifier. The file identifier is configured to form a unique mapping between the document and a document parsing result.

At block 102, the document is converted into an extensible markup language (XML) file.

In some embodiments, the downloaded document may be decompressed by a file decompression algorithm to further convert the document into the XML file. In some embodiments, under as case that the document is a word document, and the document is converted into the XML file through a Libreoffice converter.

At block 103, the XML file is parsed to extract document content from the XML file, and the document content is stored in a JavaScript Object Notation (JSON) format into a database.

In some embodiments, the XML file is parsed by a parser to obtain the document content in the XML file. Then, the document content is converted into content with the JSON format and is stored in a component of database. In some embodiments, under a case that the document is the word document, the XML file is parsed by an ElementTree parser.

Taking the word document as an example, the request for parsing the word document is received. The corresponding word document is downloaded based on the document address carried in the request. Then, the Libreoffice converter is called to convert the word document into a XML file (or a file with a XML format). In detail, document conversion is realized via a command line interface of the Libreoffice converter, that is, via a command "softfice-headless-convert-to". Further, the content of the word document is extracted from the XML file in turn taking a paragraph as a unit via an interface of the ElementTree parser, and the extracted content of the word document is converted into a content with a JSON format for storing.

With the method for parsing the document according to embodiments of the disclosure, by converting the document into the XML file, efficient document format conversion may be realized. The XML file corresponding to the document may be quickly obtained in a scenario for parsing documents in batches. Then, the converted XML file is parsed to extract the document content from the XML file, thereby realizing the efficient parsing for the XML file and improving the efficiency of parsing the document. In addition, the document content is converted into the content in the JSON format, which facilitates that the document content is applied to training of a machine learning model. Comparing with a way of calling an Apache POI tool to parse the document and re-dumping a parsing result, the processing efficiency of the document is further improved.

FIG. 2 is a flow chart illustrating a method for parsing a document according to embodiments of the disclosure. As illustrated in FIG. 2, the method includes the following.

At block 201, a request for parsing the document is received, and the document is downloaded based on the request by a download task queue.

In some embodiments, the download task queue includes a plurality of download tasks. Each download task is configured to call a corresponding download thread to obtain the request. The corresponding document is downloaded based on the request. As an example, after the request is received, under a case that there is the idle download task in the download task queue, the download thread corresponding to the idle download task is called to obtain the request, and the corresponding document is downloaded based on the request.

At block 202, the document is converted into an extensible markup language (XML) file by a conversion task queue.

In some embodiments, the conversion task queue includes a plurality of conversion tasks. Each conversion task calls a corresponding conversion thread to convert the document downloaded by the download task into the XML file. As an example, after the document is downloaded based on the request, under a case that there is the idle conversion task, the idle conversion task calls the corresponding conversion thread to convert the document into the XML file.

At block 203, the XML file is parsed by a parsing task queue to extract the document content of the XML file, and the document content is stored into a database in a JSON format.

In some embodiments, the parsing task queue includes a plurality of parsing tasks. Each parsing task calls a corresponding parsing thread to parse the XML file. As an example, after the document is converted into the XML file, under a case that there is the idle parsing task, the parsing thread corresponding to the idle parsing task is called by the idle parsing task to parse the XML file to extract the document content from the XML file, and the document content is stored in the database in the JSON format.

In some embodiments, the number of conversion tasks is respectively greater than the number of download tasks and the number of parsing tasks. In some embodiments, the number of tasks is assigned in a ratio of 1:6:1, in which the number of conversion tasks occupies 6. Since a processing speed of the conversion task is generally lower than that of the download task and that of the parsing task, the number of conversion tasks is set to be larger than that of download tasks and that of the parsing tasks, thereby improving an overall processing speed of an apparatus for parsing the document.

As implementations, the document is the word document. The document is converted into the XML file by the Libreoffice converter, and the XML file is parsed by the ElementTree parser. Further, the download task queue, the conversion task queue, and the parsing task queue are managed by a distributed task queue management tool. The distributed task queue management tool, the Libreoffice converter, and the ElementTree parser are loaded in the Docker container engine.

In some embodiments, the database has a mutual exclusion lock, and a task other than a current task is prohibited reading/writing in the database when the mutual exclusion lock is occupied by the current task. For example, the current task includes a reading/writing task. Each reading/writing task preempts the mutual exclusion lock before being executed. When the mutual exclusion lock is preempted successfully, the mutual exclusion lock is marked as an occupied state, and the mutual exclusion lock is released after the execution for the current task is completed. When the mutual exclusion lock is occupied, other tasks other than the current task wait for being executed and continuously try to preempt the mutual exclusion lock. Therefore, one current task executes the reading/writing at the same time via the mutual exclusion lock, thereby avoiding the conflict of concurrent requests, and enabling the concurrent requests for parsing the documents to be orderly recorded in the database.

With the method for parsing the document according to embodiments of the disclosure, the download task queue, the conversion task queue, and the parsing task queue are established, and each task in the task queue is controlled to call a corresponding thread to respectively execute downloading, conversion and parsing. In this way, parsing the documents may be efficiently processed in batches, the scheduling for the download task, the conversion task and the parsing task during document parsing is realized, concurrent requests for parsing the documents are supported, and the processing efficiency of parsing the documents in batches is further improved.

Based on the above embodiments, further, with the method for parsing the document according to embodiments of the disclosure, a state of the download task in the download task queue, a state of the conversion task in the conversion task queue, and a state of the parsing task in the parsing task queue may also be also monitored.

The monitoring result includes, such as a waiting state, an executing state, a succeeded state, and a failed state.

In some embodiments of the disclosure, the state of the download task in the download task queue is monitored. A new conversion task corresponding to the download task is added into the conversion task queue after the download task is completed. As an example, for each download task in the download task queue, the state of the download task is monitored. When a state of a download task for a document 1 changes from the executing state to the succeeded state, a new conversion task corresponding to the document 1 is added into the conversion task queue. When a state of a download task for a document 2 changes from the executing state to the failed state, the document 2 is downloaded again based on a retry setting.

In some embodiments of the disclosure, the state of the conversion task in the conversion task queue is monitored. A new parsing task corresponding to the conversion task is added into the parsing task queue after the conversion task is completed. As an example, for each conversion task in the conversion task queue, the state of the conversion task is monitored. When a state of a conversion task for the document 1 changes from the executing state to the succeeded state, a parsing task corresponding to the document 1 is added into the parsing task queue. When a state of the conversion task for the document 2 changes from the executing state to the failed state, the document 2 may be converted into the XML file again based on a retry setting.

In some embodiments, when it is known that the cumulative number of failed tasks within a preset period is greater than a preset threshold, a prompt message may be sent for giving an alarm to prompt a manager to handle. It should be noted that, an implementation mode of sending the prompt message may be set based on a requirement. For example, a mail may be sent to a preset mailbox, or a short message may be sent to a preset terminal device, which is not limited here.

With the method for parsing the document according to embodiments of the disclosure, monitoring for the download task, the conversion task, and the parsing task, during the document parsing may be realized, and the concurrent requests are supported, thereby ensuring the reliability while improving the efficiency of the document parsing.

To achieve the above embodiments, the disclosure also provides an apparatus for parsing a document.

FIG. 3 is a block diagram illustrating an apparatus for parsing a document according to embodiments of the disclosure. As illustrated in FIG. 3, the apparatus for parsing the document includes: a component container 100, a database component 10, a document download component 20, a document conversion component 30, and a document parsing component 40.

The database component 10, the document download component 20, the document conversion component 30, and the document parsing component 40 are disposed in the component container 100.

In some embodiments, the component container 100 includes an interface for receiving a request, and the request is for parsing a document. The request for parsing the document is received via the interface. In some embodiments, the request carries a file address. The file address is configured to grab the document. In some embodiments, the request may also carry a file identifier. The file identifier is configured to form a unique mapping between the document and a document parsing result.

As an example, the component container 100 is implemented by the Docker container engine.

In some embodiments, the document download component 20 is configured to download the document based on the request received by the interface. As an example, the request carries the file address. The document download component 20 downloads the document based on the file address carried in the request. Then the downloaded document is stored as a temporary file in local. By storing the local temporary file, the file may be deleted in time after the procedure for parsing the document completes, and a disk space may be released.

The document conversion component 30 is configured to convert the document into an XML file.

The document parsing component 40 is configured to parse the XML file to extract document content from the XML file, and to store the document content in a JSON format into the database component 10.

In some embodiments of the disclosure, the document is the word document. The document conversion component 30 is implemented by the Libreoffice converter. The document parsing component 40 is implemented by the ElementTree parser.

Description for the procedure for parsing the document may be made below by taking the word document as an example. The request is received via the interface. The document download component 20 downloads the word document and stores the word document as the temporary file in local based on the file address carried in the request. The document conversion component 30 calls the Libreoffice converter to convert the word document in the format of ".doc" or ".docx" into the XML file. In detail, the word document is decompressed by calling a file decompression algorithm based on a C language, and the decompressed document in the format of ".doc" or ".docx" is converted into the content in the XML format. The document parsing component 40 calls the ElementTree parser to parse the XML file via the interface to extract the document content from the XML file, converts the document content into the JSON format, and stores the converted document content into the database component 10.

The apparatus for parsing the document according to embodiments of the disclosure includes the component container 100, and the database component 10, the document download component 20, the document conversion component 30 and the document parsing component 40 which are all provided in the component container 100. The component container 100 includes the interface for receiving the request for parsing the document. The document download component 20 is configured to download the corresponding document based on the request received via the interface. The document conversion component 30 is configured to convert the document into the XML file. The document parsing component 40 is configured to parse the XML file to extract the document content from the XML file, and to store the document content in the JSON format into the database component 10. In this way, efficient document format conversion may be realized; the XML file corresponding to the document is quickly obtained in a scenario for parsing documents in batches, thereby realizing the efficient parsing for the XML file and improving the efficiency of parsing the document; in addition, the document content is converted into the content in the JSON format, which facilitates that the document content is applied to training of a machine learning model. Comparing with a way of calling an Apache POI tool to parse the document and re-dumping a parsing result, the processing efficiency of the document is further improved.

Based on the above embodiments, with the apparatus for parsing the document according to embodiments of the disclosure, efficient task scheduling and task monitoring may be realized, and concurrent requests for parsing the documents are supported.

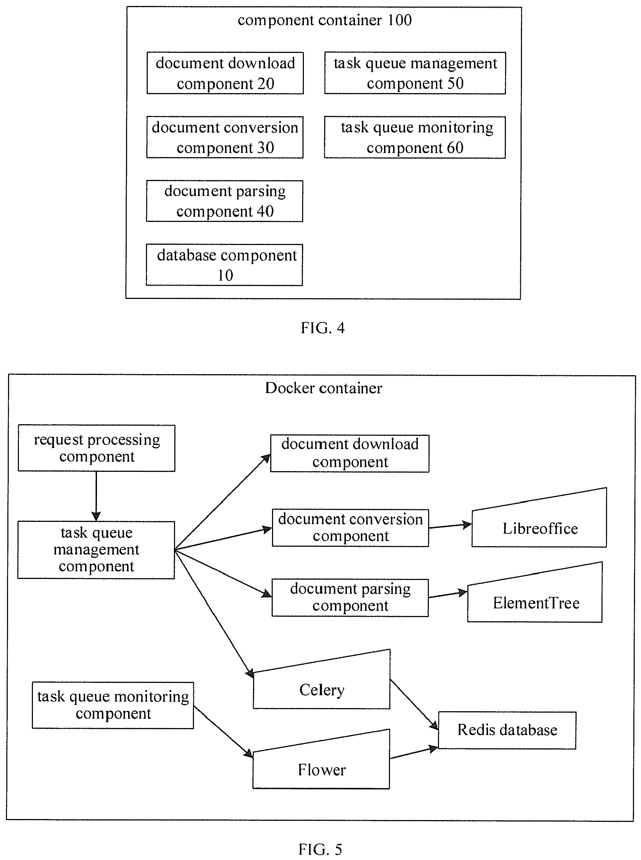

FIG. 4 is a block diagram illustrating an apparatus for parsing a document according to embodiments of the disclosure. As illustrated in FIG. 4, the apparatus includes: a component container 100, a database component 10, a document download component 20, a document conversion component 30, a document parsing component 40, a task queue management component 50, and a task queue monitoring component 60.

The task queue management component 50 and the task queue monitoring component 60 are provided in the component container 100.

In some embodiments of the disclosure, the component container 100 is implemented by the Docker container engine, and the task queue management component 50 is implemented by a distributed task queue management tool.

Description will be made below to the task queue management component 50.

In this embodiment, the task queue management component 50 is configured to control the document download component 20 by the download task queue, to control the document conversion component 30 by the conversion task queue, and to control the document parsing component 40 by the parsing task queue.

As an example, the document download component 20 is configured to download the document based on the request by the download task queue. The download task queue includes a plurality of download tasks. Each download task is configured to call a corresponding download thread to obtain the request via the interface. The document is downloaded by the document download component 20 based on the request.

As another example, the document conversion component 30 is configured to convert the document into the XML file by the conversion task queue. The conversion task queue includes a plurality of conversion tasks. Each conversion task is configured to call a corresponding conversion thread to convert the document downloaded by the download task into the XML file through the document conversion component 30.

As another example, the document parsing component 40 is configured to parse the XML file by the parsing task queue to extract the document content. The parsing task queue includes a plurality of parsing tasks. Each parsing task is configured to call a corresponding parsing thread and to parse the XML file through the document parsing component 40.

In some embodiments of the disclosure, the number of conversion tasks is respectively greater than the number of download tasks and the number of parsing tasks. In some embodiments, for documents with a same size, a task processing speed of the document conversion component 30 is generally lower than that of the document download component 20 and that of the document parsing component 40. Therefore, the number of conversion tasks is set to be greater than the number of download tasks and the number of parsing tasks, to improve an overall speed of processing the tasks by the apparatus for parsing the document.

As an example, the total number of tasks of the document download component 20, tasks of the document converting component 30 and tasks of the document parsing component 40 is less than or equal to the number of logical cores of a central processing unit (CPU). On the premise that each component is assigned with at least one task, the number of tasks is assigned in a ratio of 1:6:1, where, the number of tasks of the document conversion component 30 is 6. When the number of the logical cores of the CPU is N, and N is less than 8, one download task is assigned to the document download component 20, one parsing task is assigned to the document parsing component 40, and N-2 conversion tasks are assigned to the document conversion component 30.

Description will be made below to the task queue monitoring component 60.

In some embodiments, the task queue monitoring component 60 is configured to monitor the download task in the download task queue, the conversion task in the conversion task queue, and the parsing task in the parsing task queue. A state of the task includes, such as a waiting state, an executing state, a succeeded state and a failed state.

In some embodiments, when the task queue monitoring component 60 determines that the cumulative number of failed tasks within the preset period is greater than a preset threshold, the task queue monitoring component 60 sends a prompt message to a manager of the apparatus for parsing the document to give an alarm for prompting the manager to handle and to restart the apparatus for parsing the document. It should be noted that an implementation mode of sending the prompt message may be set based on a requirement. For example, a mail may be sent to a preset mailbox, or a short message may be sent to a preset terminal device, which is not limited here.

In some embodiments of the disclosure, the task queue monitoring component 60 includes a first monitoring component configured to monitor a state of the download task in the download task queue, and to add a new conversion task corresponding to the download task into the conversion task queue after the download task is completed.

In some embodiments of the disclosure, the task queue monitoring component 60 includes a second monitoring component configured to monitor a state of the conversion task in the conversion task queue, and to add a new parsing task corresponding to the conversion task into the parsing task queue after the conversion task is completed.

For example, a monitoring result includes execution success, execution failure, and the like. When it is known that the monitoring result of the download task by the first monitoring component is "execution success", the conversion task corresponding to the download task is added into the conversion task queue. Further, when it is known that the monitoring result of the conversion task by the second monitoring component is "execution success", the parsing task corresponding to the conversion task is newly added into the parsing task queue.

In some embodiments of the disclosure, the database component 10 has a mutual exclusion lock. When the mutual exclusion lock is preempted by a current task, the database component 10 prohibits reading/writing to other tasks.

As an example, the database component 10 has the mutual exclusion lock. The current task includes a reading /writing task. Each reading /writing task preempts the mutual exclusion lock before being executed. When the mutual exclusion lock is preempted successfully, the mutual exclusion lock is marked as an occupied state, and the mutual exclusion lock is released after execution for the current task is completed. Since the mutual exclusion lock may only be occupied by one task at the same time, the database component 10 prohibits reading/writing to other tasks that fails to preempt the mutual exclusion lock, and other tasks wait for being executed and continuously try to preempt the mutual exclusion lock. In this way, only one current task executes reading/writing at the same time via the mutual exclusion lock, which avoids the conflict of concurrent requests and enabling the concurrent requests for parsing documents to be orderly recorded in the database.

With the apparatus for parsing the document according to embodiments of the disclosure, the task queue management component 50 is configured to control the document download component 20 by the download task queue, to control the document conversion component 30 by the conversion task queue, and to control the document parsing component 40 by the parsing task queue. The task queue monitoring component 60 is configured to monitor the state of the download task in the download task queue, the state of the conversion task in the conversion task queue, and the state of the parsing task in the parsing task queue. In this way, the document parsing may be efficiently processed in batches, the task scheduling and the task monitoring of the apparatus may be realized, and concurrent requests for parsing the documents may be supported. Further, the processing efficiency of parsing the documents in batches is improved, and the reliability is ensured while the efficiency of parsing the document is improved. In addition, the Docker container is used in the apparatus, which may simplify the environment deployment procedure, the operation and the maintenance procedure of the apparatus, and improve the efficiency of deployment and transplantation of the system.

Description will be made below to a structure of the apparatus for parsing the document in combination with a practical application scenario.

FIG. 5 is a block diagram illustrating an apparatus for parsing a document according to embodiments of the disclosure. As illustrated in FIG. 5, the apparatus includes the Docker container. The Docker container is disposed with a request processing component, a task queue management component, a document download component, a document conversion component, a document parsing component, a task queue monitoring component, and a Redis database.

The request processing component includes a RESTFul (representational state transfer) API (Application Programming Interface) for receiving a request for parsing a word document. The request processing component may launch a plurality of request processing processes to process concurrent requests.

The task queue management component is configured to implement task queues via a Celery (which is a distributed task queue management tool), to execute task scheduling and to maintain execution states of the tasks based on the task queues.

The task queue monitoring component is configured to provide a query interface of the RESTFul API on the task states and task execution results. In detail, the task queue monitoring component is configured to monitor the task states via a Flower.

The document download component is configured to download the word document based on the request for parsing the word document, and to store the downloaded word document as the temporary file in local.

The document conversion component is configured to call the Libreoffice converter to convert the word document into the XML file. The document conversion component is configured to start a plurality of conversion task processing processes to process concurrent conversion tasks.

The document parsing component is configured to parse the XML file via an interface of the ElementTree parser, so as to extract file content, and to store an address of a JSON file corresponding to the file content into the Redis database. The document parsing component is configured to start a plurality of parsing task processing processes to process concurrent parsing tasks.

In this way, the efficiency of parsing the word document is improved, the efficient task scheduling and task monitoring of the apparatus may be realized, and the concurrent requests for parsing the word documents are supported.

Description will be made below to a processing procedure of parsing the document by taking a request as an example.

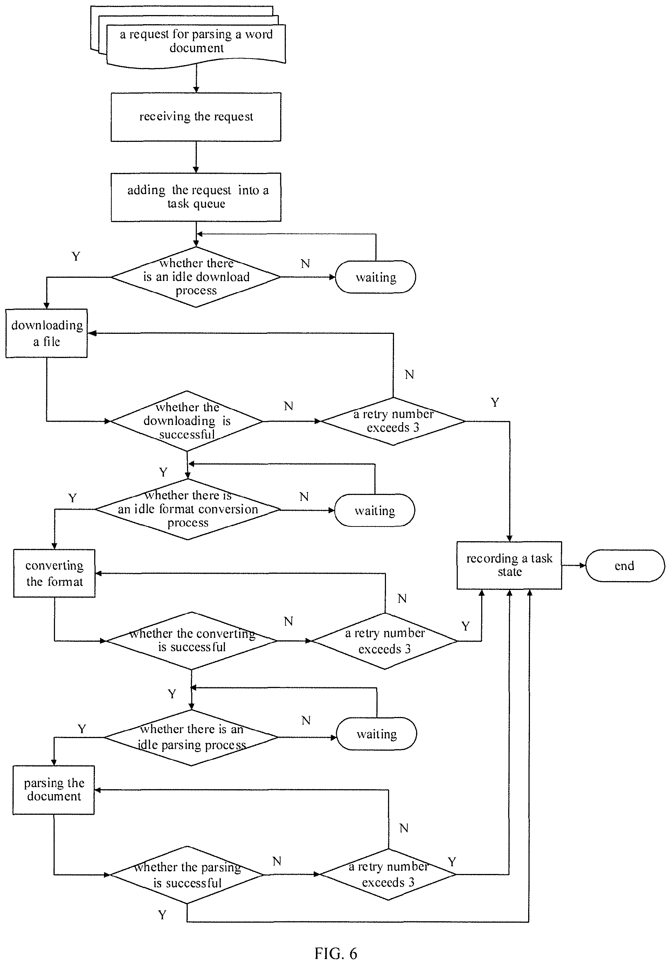

FIG. 6 is a flow chart illustrating a processing procedure for parsing a document according to embodiments of the disclosure.

In some embodiments, for each request for parsing a document, the request processing component is configured to receive the request, to input the request into a request queue, and to feed back a task identifier.

The task queue management component checks whether the document download component has an idle process, and sends a document download task to the idle process when there is the idle process, and continues to wait when there is no idle process.

A preset retry limit of the download task queue is queried when the document download fails after downloading the document is executed. When the preset retry limit is exceeded, a download failure state is recorded in the Redis database. The document is downloaded again when the preset retry limit is not exceeded. A feedback is sent to the download task queue when the document is downloaded successfully. Further, the task queue management component checks whether the document conversion component has an idle process, and sends a document conversion task to the idle process when there is the idle process, and continues to wait when there is no idle process.

When the document format conversion fails after document conversion is performed, a preset retry limit of the conversion task queue is queried. When the preset retry limit is exceeded, the conversion failure state is recorded in the Redis database. The document format conversion is executed again when the preset retry limit is not exceeded. When the document format conversion is successful, a feedback is sent to the conversion task queue. Then, the task queue management component checks whether the document parsing component has an idle process, sends a document parsing task to the idle process when there is the idle process, and continues to wait when there is no idle process.

After parsing the document is executed, a preset retry limit of the parsing task queue is queried when the document parsing fails. A parsing failure state is recorded in the Redis database when the preset retry limit is exceeded. Parsing the document is executed again when the preset retry limit is not exceeded. When the document is successfully parsed, the parsed document content is stored as a JSON file, and a feedback is sent to the parsing task queue.

For a query request for querying each task state, the task queue monitoring component receives the request for querying the task state, queries the Redis database based on a task identifier, and feeds back the task state. The task state includes a waiting state, an executing state, a succeed state and a failed state.

For a request for querying each task execution result, the task queue monitoring component receives the request for querying the task execution result, queries the task state from the Redis database based on the task identifier, feeds back the task execution result, for example, a path of the JSON file may be fed back when the task state is the succeed state, and the task state may be fed back when the task state is not the succeed state.

In this way, the efficiency of parsing the word document is improved, the efficient task scheduling and task monitoring of the apparatus are realized, and the concurrent requests for parsing the word documents are supported.

In order to facilitate the understanding of the disclosure, description will be briefly made below to some terms involved in the above embodiments. It should be noted that the description made below is only for the convenience of understanding the disclosure, and should not be regarded as limiting the whole connotation and/or extension of each concept.

The Libreoffice converter provides a series of interfaces for reading and writing the document, and supports a document format such as Word, PPT and Excel.

The ElementTree parser refers to an operation interface for a XML object built by the Python programming language.

The Celery supports executing task scheduling on distributed machines, processes and threads by using task queues. An architecture of the Celery includes a message broker, a task execution unit (worker) and a task result store. The Celery does not provide message service, but may be easily integrated with a message middleware (such as RabbitMQ, Redis, and MongoDB) provided by third parties. Task execution units may run concurrently in nodes of a distributed system. Storage for a task execution result refers to storing a result generated by the task execution unit. The Celery supports the storage in forms of Redis, MongoDB, Django ORM, AMQP, etc.

The Flower is a web-based tool for monitoring and managing the Celery. The Flower monitors and manages the tasks in the Celery via API interfaces, and the operation of the Flower may not affect the execution of the task queues.

The Docker is an open source application container engine. Based on the Docker container, configuration for an environment for running application software may be implemented on the basis of various operating systems, and Docker mirroring may be packaged and exported.

To achieve the above embodiments, the disclosure also provides a computer program product. When instructions in the computer program product are executed by a processor, the method for parsing the document according to any of the above embodiments is implemented.

According to embodiments of the disclosure, the disclosure also provides an electronic device and a readable storage medium.

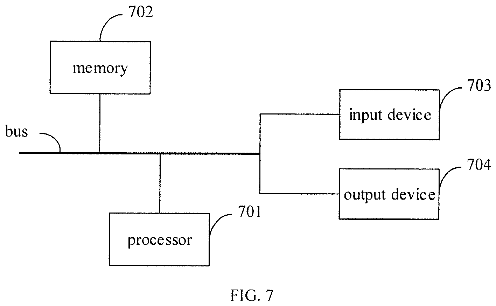

As illustrated in FIG, 7, FIG. 7 is a block diagram illustrating an electronic device capable of implementing a method for parsing a document according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 7, the electronic device includes: one or more processors 701, a memory 702, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 7, a processor 701 is taken as an example.

The memory 702 is a non-transitory computer readable storage medium provided by the disclosure. The memory is configured to store instructions executable by at least one processor, to enable the at least one processor to execute the method for parsing the document provided by the disclosure. The non-transitory computer readable storage medium provided by the disclosure is configured to store computer instructions. The computer instructions are configured to enable a computer to execute the method for parsing the document provided by the disclosure.

As the non-transitory computer readable storage medium, the memory 702 may be configured to store non-transitory software programs, non-transitory computer executable programs and modules, such as program instructions/module corresponding to the method for parsing the document according to embodiments of the disclosure. The processor 701 is configured to execute various functional applications and data processing of the server by operating non-transitory software programs, instructions and modules stored in the memory 702, that is, implements the method for parsing the document according to the above method embodiments.

The memory 702 may include a storage program region and a storage data region. The storage program region may store an application required by an operating system and at least one function. The storage data region may store data created according to predicted usage of the electronic device based on the semantic representation. In addition, the memory 702 may include a high-speed random access memory, and may also include a non-transitory memory, such as at least one disk memory device, a flash memory device, or other non-transitory solid-state memory device. In some embodiments, the memory 702 may optionally include memories remotely located to the processor 701, and these remote memories may be connected to the electronic device via a network. Examples of the above network include, but are not limited to, an Internet, an intranet, a local area network, a mobile communication network and combinations thereof.

The electronic device capable of implementing the method for parsing the document may also include: an input device 703 and an output device 704. The processor 701, the memory 702, the input device 703, and the output device 704 may be connected via a bus or in other means. In FIG. 7, the bus is taken as an example.

The input device 703 may receive inputted digital or character information, and generate key signal input related to user setting and function control of the electronic device, such as a touch screen, a keypad, a mouse, a track pad, a touch pad, an indicator stick, one or more mouse buttons, a trackball, a joystick and other input device. The output device 704 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, subcombinations and substitutions may be made based on design requirements and other factors. Any modification, equivalent substitution and improvement made within the spirit and the principle of the disclosure shall be included in the protection scope of disclosure.

## Claims

1. A method for parsing a document, comprising:
receiving (101) a request for parsing the document;
downloading (101) the document based on the request;
converting (102) the document into an extensible markup language (XML) file;
parsing (103) the XML file to extract document content from the XML file; and
storing (103) the document content in a JavaScript Object Notation (JSON) format into a database.

2. The method of claim 1, wherein,
downloading (101) the document based on the request comprises:
downloading (201) the document based on the request by a download task queue, the download task queue comprising a plurality of download tasks, and each download task for calling a corresponding download thread to obtain the request and downloading the document based on the request;
converting (102) the document into the XML file comprises:
converting (202) the document into the XML file by a conversion task queue, the conversion task queue comprising a plurality of conversion tasks, and each conversion task for calling a corresponding conversion thread to convert the document downloaded by the download task into the XML file; and
parsing (103) the XML file to extract the document content from the XML file comprises:
parsing (203) the XML file by a parsing task queue to extract the document content, the parsing task queue comprising a plurality of parsing tasks, and each parsing task calling a parsing thread to parse the XML file.

3. The method of claim 2, further comprising:
monitoring a state of the download task in the download task queue; and
adding a new conversion task corresponding to the download task into the conversion task queue after the download task is completed.

4. The method of claim 2 or 3, further comprising:
monitoring a state of the conversion task in the conversion task queue; and
adding a new parsing task corresponding to the conversion task into the parsing task queue after the conversion task is completed.

5. The method of any one of claims 1 to 4, wherein.
the document is a word document,
converting the document into the XML file comprises:
converting the document into the XML file by a Libreoffice converter; and
parsing the XML file to extract the document content from the XML file comprises:
parsing the XML file by an ElementTree parser to extract the document content from the XML file.

6. The method of claim 5, further comprising:
managing the download task queue, the conversion task queue, and the parsing task queue by a distributed task queue management tool,
the distributed task queue management tool, the Libreoffice converter, and the ElementTree parser being loaded in a Docker container engine.

7. The method of any one of claims 1 to 6, wherein the database has a mutual exclusion lock, and a task other than a current task is prohibited reading/writing in the database when the mutual exclusion lock is occupied by the current task.

8. The method of any one of claims 2 to 7, wherein a number of conversion tasks is greater than a number of download tasks, and a number of conversion tasks is greater than a number of parsing tasks.

9. An apparatus for parsing a document, comprising:
a component container (100), comprising an interface for receiving a request for parsing the document;
a database component (10), provided in the component container (100);
a document download component (20), provided in the component container (100), and configured to download the document based on the request received via the interface;
a document conversion component (30), provided in the component container (100), and configured to convert the document into an XML file; and
a document parsing component (40), provided in the component container (100), and configured to parse the XML file to extract document content from the XML file; and to store the document content in a JSON format into the database component.

10. The apparatus of claim 9, wherein the document download component (20) is configured to download the document based on the request by a download task queue, the download task queue comprising a plurality of download tasks, and each download task for calling a corresponding download thread to obtain the request and downloading the document based on the request;
the document conversion component (30) is configured to convert the document into the XML file by a conversion task queue, the conversion task queue comprising a plurality of conversion tasks, and each conversion task for calling a corresponding conversion thread to convert the document downloaded by the download task into the XML file; and
the document parsing component (40) is configured to parse the XML file by a parsing task queue to extract the document content, the parsing task queue comprising a plurality of parsing tasks, and each parsing task calling a parsing thread to parse the XML file.

11. The apparatus of claim 10, further comprising:
a first monitoring component, configured to monitor a state of the download task in the download task queue; and to add a new conversion task corresponding to the download task into the conversion task queue after the download task is completed.

12. The apparatus of claim 10 or 11, further comprising:
a second monitoring component, configured to monitor a state of the conversion task in the conversion task queue; and to add a new parsing task corresponding to the conversion task into the parsing task queue after the conversion task is completed.

13. The apparatus of any one of claims 9 to 12, wherein the document is a word document,
the document conversion component (30) is implemented by a Libreoffice converter; and
the document parsing component (40) is implemented by an ElementTree parser.

14. The apparatus of claim 13, further comprising:
a task queue management component (50), configured to control the document download component by the download task queue, to control the document conversion component by the conversion task queue, and to control the document parsing component by the parsing task queue, the task queue management component being implemented by a distributed task queue management tool, and the component container being implemented by a Docker container engine.

15. A computer readable storage medium having computer instructions stored thereon, wherein the computer instructions are configured to cause a computer to execute the method for parsing the document according to any one of claims 1 to 8.
